(19) **Europäisches Patentamt / European Patent Office / Office européen des brevets**

(11) **EP 2 749 007 B1**

(12) **EUROPEAN PATENT SPECIFICATION**

(45) Date of publication and mention
of the grant of the patent:
**04.09.2019  Bulletin 2019/36**

(21) Application number: **12877060.9**

(22) Date of filing: **15.05.2012**

(51) Int Cl.:
*H04L 12/24* (2006.01)     *H04L 29/08* (2006.01)

(86) International application number:
**PCT/CN2012/075511**

(87) International publication number:
**WO 2013/170442 (21.11.2013 Gazette 2013/47)**

(54) **MANAGED OBJECT MANIPULATION**

VERWALTETE OBJEKTMANIPULATION

MANIPULATION D'OBJET GÉRÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.07.2014  Bulletin 2014/27**

(73) Proprietor: **Telefonaktiebolaget LM Ericsson
(publ)
164 83 Stockholm (SE)**

(72) Inventor: **LI, Qingsong
Nanjing
Jiangsu 210000 (CN)**

(74) Representative: **Ericsson
Patent Development
Torshamnsgatan 21-23
164 80 Stockholm (SE)**

(56) References cited:
**WO-A1-2011/088406     CN-A- 101 174 898
CN-A- 101 776 996     US-A1- 2009 254 606
US-A1- 2009 313 307     US-B1- 7 100 149**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The disclosure generally relates to communication systems, and more particularly, to a method and apparatus for performing at least one managed object (MO) operations and a method and apparatus for requesting at least one managed object (MO) operations on MOs.

**BACKGROUND**

Unless otherwise indicated herein, the approaches described in this section are not prior art to the claims in this disclosure and are not admitted to be prior art by inclusion in this section.

Network management systems for radio access network or other telecom networks like IP transport network normally follow the ITU-T TMN recommendations as well as 3GPP telecommunication management standards. In these network management systems, a hierarchical architecture and a Manager-Agent model are usually used. There may be a unified network management system on the top level, which manages one or more sub-network management systems. The sub-network management systems may be called Domain Manager(DM), and each Domain Manager on the other hand usually manages one or more Element Managers(EM). Element Manager is the manageable unit which manages one or more Network Elements(NE).

Network management activities in above network management systems usually refer as OAM&P(operations, administration, maintenance, and provisioning). During such activities, one or more Managed Objects(MO) are usually involved. Managed Object in general is an abstraction of physical or logical resource to be managed. The definition of Managed Object, which is normally called Managed Object Class(MOC), is pre-known between different levels of network management systems. Each level of network management system could maintain a database of Managed Objects, which is called Managed Information Base(MIB).

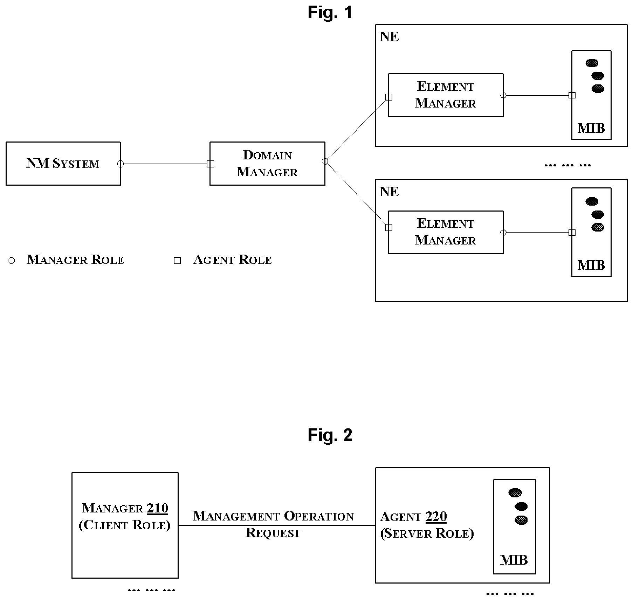

Fig. 1 shows a schematic diagram of a Manager-Agent model network management system architecture. In the architecture as shown in Fig. 1, a network management system may represent as Manager role which sends management operation requests towards lower level network management system, while a network management system may also represent as Agent role which responds to the management operation requests from upper layer NMS and sends notifications to Manager. There are few standard application level protocols to define the management operations between NMS and DM, that is also called NorthBound Interface(NBI), like CMIP or 3GPP Telecommunication management IRPs. On the other hand, the management operations between DM and EM, and between EM and NE, which are called SouthBound Interface(SBI), still remain vendor specific. Such management operations are normally in a client-server style, use distributed request broker protocols like CORBA over IIOP.

Management operations occur at different stages of Network Element lifecycle, from developing, testing to in-service operation and maintenance. For example, an upgrade program might need to use management operations to update a MO configuration data so that new features for a NE could be activated. I&V engineer might need to write a test script to use management operations to configure a testable NE. A NE administrator may open a GUI from EM to monitor NE status. This also implies management operations happened.

Such management operations in the above mentioned Network Management System architecture normally means to manipulate (CRUD: create/ read/ update/ delete) Managed Objects towards NE, via requests from Manager to Agent.

Current management operation defined in SBI or NBI is a simple request-response based API set. Each operation is a single MOC oriented operation, which filters the MOs and possibly all its containment (children) MOs by a simple filter condition to complete the given manipulation operation and respond with expected information to the Manager.

The existing selection procedure for the MO manipulation could be further described as:

1. Use a parameter BaseObject of Distinguished Name as the start point for the selection of Managed Objects.
2. Another parameter named Scope to define the levels of the containment hierarchy from the BaseObject.
3. A third parameter Filter to filter out some of selected Managed Objects from above steps.

For example, a method based on the selection procedure was proposed for returning only portion of desired attributes information of selected MOs, instead of all attributes information (see Reference 1).

Another method based on the selection procedure was proposed to modify only portion of value for one attribute of selected MOs, instead of all value information for the attribute needed (see Reference 2).

However such a selection procedure has two major limitations as follows (see Reference 3):

1. The selection with BaseObject and Scope parameters make it only possible to select MOs with parent-child (containment) relationship. This does not reflect the real MO relationships in a MIB, where there may be lots of reference relationship from one MO to another MO in a MIB;
2. The Filter parameter is only applied to the selected MOs, but not to other MOs.

Management operations with above limitations have several disadvantages when handling Managed Object manipulation activities:

1. It needs at least two operations when increment/decrement a MO attribute value is needed. Firstly, it needs to retrieve the original value of the attribute with a read operation, and then an update operation is needed to set the new value.
2. It is difficult to use when Managed Object manipulation activity needs to involve more than one MOC. Specifically, it often needs a set of operation requests since current management operation is single MOC oriented. Besides this, it also needs additional logic check in Manager for the interim results returned from the management operation requests.
3. Due to above difficulty, it increases complexity to implement a management activity.
4. The complexity on the other hand reduces the quality of management activity for instance correctness of management activity. This is crucial for some management activities such as upgrade program.
5. More management operations also mean more communication overhead between Manager and Agent.

For example, there is a case to update transport termination situation for Node B Application Part (NBAP) of Common Procedure in a RBS node, that could be either "IP" or "ATM" or a dual stack configuration with both "IP" and "ATM" enabled. The example is to disable both of the "IP" and "ATM" transport termination if it's a dual stack configuration. Here, assume "NBAPCommon" is the MOC of NBAP Common Procedure in the RBS, which has two reference attributes named "atmRef" and "ipRef" pointing to MOC "ATM" and "IP" respectively, and both "ATM" and "IP" have an attribute "opStatus" to indicate if it's enabled or disabled. To complete the task, the steps in Manager look like:

1) Read "NBAPCommon" MO from Agent with a management operation.
2) Read "ATM" MO from Agent with another management operation with the value of the "atmRef" attribute.
3) Read "IP" MO from Agent with a third management operation with the value of the "ipRef" attribute.
4) Check the conditions of the above "ATM" MO and "IP" MO in Manager side:

i. If only one of the two MOs exist, nothing would be executed in Manager.
ii. Both two MOs exist, check "opStatus" attribute for both:

1. If both are "enabled", set the "opStatus" attribute of "ATM" MO to "disabled" with a management operation.
2. Otherwise, nothing would be executed in Manager.

It can be seen that there are at least 3 management operations against the Agent, plus a couple of conditions that must be checked in Manager.
For the above mentioned problems about the current management operations for Managed Object manipulation, it is needed to design a method to overcome them so that complex Managed Object manipulation could be done in a flexible and ease of use manner.
US 7 100 149 B1 (VENKATESAN RAJASEKAR [US] ET AL) 29 August 2006, relates to a generic interface for monitoring, configuring, and controlling managed objects in order to manage a network element in a communication network.
US 2009/254606 A1 (POWER JOHN [IE] ETAL) 8 October 2009, relates to filtering of network management information in a telecommunication system.
US2009/313307 A1 (POWER JOHN [IE] ET AL) 17 December 2009, relates to manipulation of network management information in a telecommunication system

## SUMMARY

According to the present disclosure, an improved method for performing an MO operation is proposed to solve or relieve at least one of the above problems or disadvantages. The invention is defined by the appended independent claims. Further embodiments are defined by the dependent claims.
In a first aspect of the present disclosure, there is provided a method for performing one or more managed object (MO) operations, the method including: receiving a request for said one or more MO operations, the request including one or more manipulation entries, each of said one or more manipulation entries corresponding to each of said one or more MO operations; obtaining said one or more manipulation entries from the received request; and for each of said one or more manipulation entries, performing an MO operation corresponding to the manipulation entry.

In one example, each of said one or more manipulation entries may include: a manipulation identifier, indicating a type of the MO operation corresponding to the manipulation entry; and a target MO list, indicating a list of MOs which are targets of the MO operation corresponding to the manipulation entry.

Furthermore, each of said one or more manipulation entries may further include:

a list of MO attribute name-value pairs, each MO attribute name-value pair consisting of an MO attribute name and a corresponding MO attribute value, the MO attribute name indicating an attribute for one MO in the target MO list and the corresponding MO attribute value indicating a value of the attribute used in the MO operation corresponding to the manipulation entry; and/ or
a manipulation constraint, including:

one or more conditions for the MO operation corresponding to the manipulation entry; and/ or

one or more relationships between two or more MOs in the target MO list.

In another example, before performing the MO operation corresponding to the manipulation entry, the method may further include: obtaining a management context from the received request; checking if the management context is in a current context for a device receiving the request.

Alternatively, the method may further include: transmitting, to a third party capable of handling the manipulation entry, a management request containing the manipulation entry if the management context is not in the current context; and receiving, from the third party, a response to the management request.

In still another example, for each of said one or more manipulation entries, before performing the MO operation corresponding to the manipulation entry, the method may further include selecting one or more MOs based on a target MO list indicated by the manipulation entry, wherein performing the MO operation corresponding to the manipulation entry may include: performing the MO operation for the one or more selected MOs based on a type of the MO operation indicated by the manipulation entry.

In yet another example, for each of said one or more manipulation entries, before performing the MO operation corresponding to the manipulation entry, the method may further include selecting one or more MOs based on a target MO list and a manipulation constraint indicated by the corresponding manipulation entry, wherein performing the MO operation corresponding to the manipulation entry may include: performing the MO operation for the one or more selected MOs based on a type of the MO operation indicated by the manipulation entry, or based on a type of the MO operation and one or more target attributes indicated by the manipulation entry.

In still another example, the method may further include responding results of said one or more MO operations.

In a second aspect of the present disclosure, there is provided a method for requesting one or more managed object (MO) operations, including: generating one or more manipulation entries based on said one or more MO operations, each of said one or more manipulation entries corresponding to each of said one or more MO operations; and transmitting a request for said one or more MO operations, the request including said one or more manipulation entries.

In an example, each of said one or more manipulation entries may include: a manipulation identifier, indicating a type of the MO operation corresponding to the manipulation entry; and a target MO list, indicating a list of MOs which are targets of the MO operation corresponding to the manipulation entry.

Furthermore, each of said one or more manipulation entries may further include:

a list of MO attribute name-value pairs, each MO attribute name-value pair consisting of an MO attribute name and a corresponding MO attribute value, the MO attribute name indicating an attribute for one MO in the target MO list and the corresponding MO attribute value indicating a value of the attribute used in the MO operation corresponding to the manipulation entry; and/ or
a manipulation constraint, including:

one or more conditions for the MO operation corresponding to the manipulation entry; and/ or
one or more relationships between two or more MOs in the target MO list.

In another example, the method may further include receiving results of said one or more MO operations from a device receiving the request.

In a third aspect of the present disclosure, there is provided an apparatus for performing one or more managed object (MO) operations, the apparatus including: a receiving unit configured to receive a request for said one or more MO operations, the request including one or more manipulation entries, each of said one or more manipulation entries corresponding to each of said one or more MO operations; an obtaining unit configured to obtain said one or more manipulation entries from the received request; and an executing unit configured to, for each of said one or more manipulation entries, perform an MO operation corresponding to the manipulation entry.

In a fourth embodiment of the present disclosure, there is provided an apparatus for requesting one or more managed object (MO) operations, including: a generating unit configured to generate one or more manipulation entries based on said one or more MO operations, each of said one or more manipulation entries corresponding to each of said one or more MO operations; and a transmitting unit configured to transmit a request for said one or more MO operations, the request including said one or more manipulation entries.

In a fifth embodiment of the present disclosure, there is provided a computer storage medium having computer-executable instructions stored thereon which, when executed by a computer, adapt the computer to perform the method according to any one of the first and second embodiments of the present disclosure.

In a sixth embodiment of the present disclosure, there is provided a data structure for use in requesting one or more managed object (MO) operations, including one or more manipulation entries, each of said one or more manipulation entries correspond to each of said one or more MO operations.

The embodiments of the present disclosure at least lead to the following benefits and advantages:

- Overcoming the limitation that only containment (parent-child) relationship could be used in the selection procedure;
- Overcoming the limitation of constraints only applied to selected MOs in the selection procedure;
- Increment/Decrement MO attribute value with only one management request;
- Significantly reducing the number of management requests needed for MO manipulation operations, thereby significantly reducing the communication traffic overhead between Manager and Agent;
- Enabling a flexible and ease of use approach to develop management activities for NEs in the whole NE lifecycle;
- Simplifying the management activity artifact significantly as the invention enabling complex MOs logical handling inside the Manipulation Entry, which will be automatically evaluated in the Agent;
- Reducing the needed development effort significantly as the management activity artifact is significantly simplified; and
- Improving the quality of management activity artifact as the complexity of the artifact is reduced, for instance the correctness.

## BRIEF DESCRIPTION OF THE DRAWINGS

The above and other objects, features and advantages of the present disclosure will be clearer from the following detailed description about the non-limited embodiments of the present disclosure taken in conjunction with the accompanied drawings, in which:

Fig. 1    shows a schematic diagram of a Manager-Agent model network management system architecture;
Fig. 2    shows a network management system 200 where the present disclosure may be applied;
Fig. 3    shows a flowchart of a method 300 for performing one or more MO operations according to an embodiment of the present disclosure;
Fig. 4    shows a flowchart of a method 400 for requesting one or more MO operations according to an embodiment of the present disclosure;
Fig. 5    shows a diagram of an exemplary portion 500 (i.e., an example manipulation description) of the management operation request according to the present disclosure;
Fig. 6    shows a diagram of an example manipulation entry 600 according to the present disclosure;
Fig. 7    shows a diagram of an example of the target MO list according to the present disclosure;
Fig. 8    shows a diagram of an example of the target attribute list according to the present disclosure;
Fig. 9    shows a first example of a manipulation entry according to the present disclosure;
Fig. 10   shows a second example of a manipulation entry according to the present disclosure;
Fig. 11   shows a third example of a manipulation entry according to the present disclosure;
Fig. 12   shows a flowchart of a method 1200 for performing MO operations at a server side according to an embodiment of the present disclosure;
Fig. 13   shows a flowchart of an exemplary method 1300 for depicting step S1250 in detail;
Fig. 14   shows an exemplary structure of the AST tree according to the present disclosure;
Fig. 15   shows a schematic diagram of an apparatus 1500 for performing one or more MO operations according to an embodiment of the present disclosure; and
Fig. 16   shows a schematic diagram of an apparatus 1600 for requesting one or more MO operations according to an embodiment of the present disclosure.

**DETAILED DESCRIPTION OF EMBODIMENTS**

In the following detailed description, reference is made to the accompanying drawings, which form a part hereof. In the drawings, similar symbols typically identify similar components, unless context dictates otherwise. The illustrative examples or embodiments described in the detailed description, drawings, and claims are not meant to be limiting.

Fig. 2 shows a network management system 200 where the present disclosure may be applied. As shown in Fig. 2, the system contains a Manager 210 and an Agent 220. The Manager 210 may send a management operation request to the Agent 220. The Manager 210 may represent as Client role which could be an Element Manager, Domain Manager or other top level Network Management System, or could even be any processor which is able to send management operations towards Agent. The Agent 220 may represent as Server role which could respond to the management operations, an Agent could be an Element Manager, Domain Manager or any network elements which supports management operations for instances a WCDMA NodeB Base Station. The Manager 210 and the Agent 220 may switch their roles from Manager to Agent or from Agent to Manager in another hierarchical network management system, but would still follow the rules defined in Fig. 2. Although Fig. 2 is exemplified in the context of one Agent, more than one Agent may be also applied here.

The transport network between Client and Server could be an IP based wired/wireless transport network, an ATM transport network, or the like network. The distributed computing protocols which terminate the management operations could be CORBA, EJB, SOAP, REST, Raw Socket etc. The management operation protocol may be standard protocols like CMIP, SNMP, 3GPP telecommunication management IRPs, or vendor specific management operation protocol.

The Manager 210 may send a management operation request to the Agent 220. This could be done via an existing management operation standard like 3GPP CORBA solution set or CMIP etc. The Manager 210 may also use in-house methods to send requests to the Agent 220, for instance, a message passing or a method call.

The Manager 210 and the Agent 220 may be in different processors which together form a distributed system. Alternatively, the Manager 210 and the Agent 220 may be in the same processor. In this case, the Manager 210 and the Agent 220 are substantially different software modules within one system.

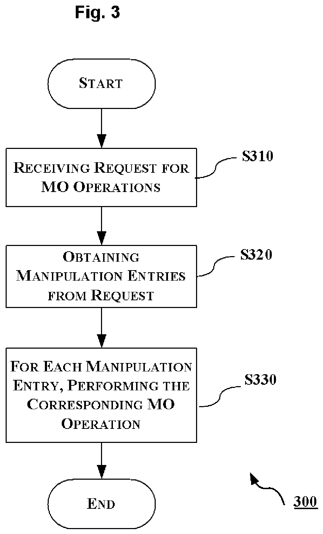

Fig. 3 shows a flowchart of a method 300 for performing one or more MO operations according to an embodiment of the present disclosure. As shown in Fig. 3, the method 300 may include the following steps of: receiving a request for said one or more MO operations (also referred to as a management operation request hereinafter) (step S310), the request including one or more manipulation entries, each of said one or more manipulation entries corresponding to each of said one or more MO operations; obtaining said one or more manipulation entries from the received request (step S320); and for each of said one or more manipulation entries, performing an MO operation corresponding to the manipulation entry (step S330). Preferably, the manipulation entries may correspond to the MO operations in one-to-one correspondence.

As an example, the method 300 may be particularly applied in the scenario as illustrated in Fig. 2 as follows. Specifically, the Manager 210 may transmit a management operation request to the Agent 220. Upon receiving the request, the Agent 220 may obtain one or more manipulation entries from the request and then perform a corresponding MO operation for each manipulation entry.

As a non-limiting example, each of the manipulation entries may include a manipulation identifier and a target MO list. The manipulation identifier may indicate a type of the MO operation corresponding to the manipulation entry, and the target MO list may indicate a list of one or more MOs which are targets of the MO operation corresponding to the manipulation entry.

Alternatively, each of the manipulation entries may further include a list of MO attribute name-value pairs, or a manipulation constraint, or both. Each MO attribute name-value pair may consist of an MO attribute name and a corresponding MO attribute value. The MO attribute name may indicate an attribute for one MO in the target MO list and the corresponding MO attribute value may indicate a value of the attribute used in the MO operation corresponding to the manipulation entry. The manipulation constraint may include one or more conditions for the MO operation corresponding to the manipulation entry. The manipulation constraint may include one or more relationships between two or more MOs in the target MO list. The manipulation constraint may include one or more conditions and one or more relationships described above, or both.

Preferably, the definition of relationships between MOs here may involve any MO in the target MO list. This may overcome the limitation that only containment (parent-child) relationship could be used in the selection procedure.

Preferably, the relationships here may involve relationships between MOs, which are not selected MOs in the selection procedure. This may overcome the limitation of constraints only applied to selected MOs in the selection procedure.

As a non-limiting example, before performing the MO operation corresponding to the manipulation entry, the method 300 may further include steps of: obtaining a management context from the received request; and checking if the management context is in a current context for a device receiving the request. In this case, the method 300 may further include steps of: transmitting, to a third party capable of handling the manipulation entry, a management request containing the manipulation entry if the management context is not in the current context; and receiving, from the third party, a response to the management request.

As a non-limiting example, for each of said one or more manipulation entries, before performing the MO operation corresponding to the manipulation entry, the method 300 may further include a step of selecting one or more MOs based on a target MO list indicated by the manipulation entry. In this example, the step of performing the MO operation corresponding to the manipulation entry may include performing the MO operation for the one or more selected MOs based on a type of the MO operation indicated by the manipulation entry.

As a non-limiting example, for each of said one or more manipulation entries, before performing the MO operation corresponding to the manipulation entry, the method 300 may further include steps of: selecting one or more MOs based on a target MO list and a manipulation constraint indicated by the corresponding manipulation entry. In this example, the step of performing the MO operation corresponding to the manipulation entry may include performing the MO operation for the one or more selected MOs based on a type of the MO operation indicated by the manipulation entry, or based on a type of the MO operation and one or more target attributes indicated by the manipulation entry.

As a non-limiting example, the method 300 may further include a step of responding results of said one or more MO operations.

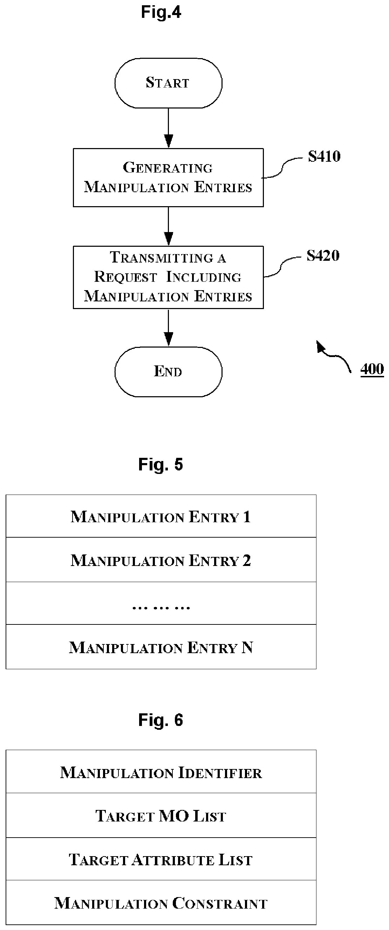

Fig. 4 shows a flowchart of a method 400 for requesting one or more MO operations according to an embodiment of the present disclosure. As shown in Fig. 4, the method 400 may include the following steps of: generating one or more manipulation entries based on said one or more MO operations, each of said one or more manipulation entries corresponding to each of said one or more MO operations (step S410); and transmitting a request for said one or more MO operations (referred to as a management operation request hereinafter), the request including said one or more manipulation entries (step S420).

As a non-limiting example, each of the manipulation entries may include a manipulation identifier and a target MO list. The manipulation identifier may indicate a type of the MO operation corresponding to the manipulation entry, and the target MO list may indicate a list of one or more MOs which are targets of the MO operation corresponding to the manipulation entry.

Alternatively, each of the manipulation entries may further include a list of MO attribute name-value pairs, or a manipulation constraint, or both. Each MO attribute name-value pair may consist of an MO attribute name and a corresponding MO attribute value. The MO attribute name may indicate an attribute for one MO in the target MO list and the corresponding MO attribute value may indicate a value of the attribute used in the MO operation corresponding to the manipulation entry. The manipulation constraint may include one or more conditions for the MO operation corresponding to the manipulation entry. The manipulation constraint may include one or more relationships between two or more MOs in the target MO list. The manipulation constraint may include one or more conditions and one or more relationships described above, or both.

Preferably, the definition of relationships between MOs here may involve any MO in the target MO list. This may overcome the limitation that only containment (parent-child) relationship could be used in the selection procedure.

Preferably, the relationships here may involve relationships between MOs, which are not selected MOs in the selection procedure. This may overcome the limitation of constraints only applied to selected MOs in the selection procedure.

As a non-limiting example, the method 400 may further include a step of receiving results of the one or more MO operations from a device receiving the request.

As an example, the method 400 may be particularly applied in the scenario as illustrated in Fig. 2 as follows. Specifically, the Manager 210 may generate one or more manipulation entries based on the one or more MO operations. Each of the one or more manipulation entries correspond to each of said one or more MO operations. As an example, the manipulation entries may correspond to the MO operations in one-to-one correspondence. Then, the Manager 210 may transmit a management operation request to the Agent 220. The request may include the one or more manipulation entries. Finally, the Manager 210 may receive results of the one or more MO operations from the Agent 220.

Fig. 5 shows a diagram of an exemplary portion 500 (i.e. an example manipulation description) of the management operation request according to the present disclosure. As illustrated, the manipulation description 500 of the management operation request may consist of a list of manipulation entries. Each entry may be an execution unit. Once an operation/ execution result for a manipulation entry failed, entries following it will not be executed. It should be appreciated that the exemplary portion 400 may include either one manipulation entry, or at least two manipulation entries.

Fig. 6 shows a diagram of an example manipulation entry 600 according to the present disclosure. As illustrated, the manipulation Entry 600 may have two items, i.e., a manipulation identifier and a target MO List. As an option, the manipulation entry 600 may further include a target attribute list (also referred to as a list of MO attribute name-value pairs). As another option, the manipulation entry 600 may further include a manipulation constraint. It should be appreciated that the manipulation entry 600 may include both of the target attribute list and the manipulation constraint.

The manipulation Identifier may indicate a type of the MO operation corresponding to the manipulation entry, i.e., what type of operation the manipulation entry is intended to do. Examples of the possible action may be create, read, update, or delete operations. Create means to create MO instances into the MIB, read means to retrieve certain MO information from MIB, update means to update MO attributes, and delete means to delete MO instances from MIB. In a preferred example implementation for the manipulation identifier, a text "insert" could indicate create operation, "select" indicates read operation, "update" indicates update operation and "delete" means delete operation.

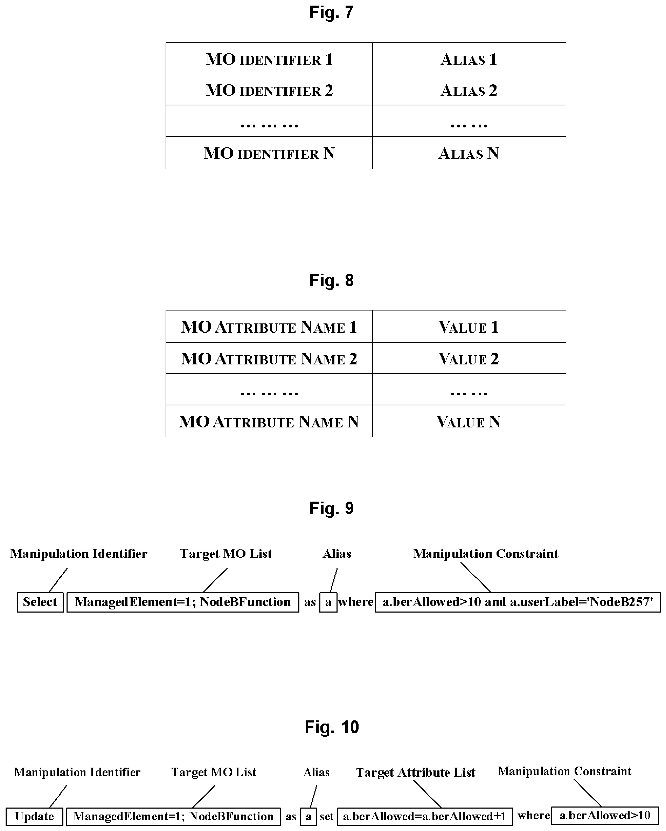

Fig. 7 shows a diagram of an example of the target MO list according to the present disclosure. As illustrated, the target MO list is a list of MO identifiers along with an alias for each identifier. The MO identifier is a unique ID which could be recognized as a Managed Object instance or a set of Managed Objects, Alias is an optional item which give the identifier another user-friendly name and could be used later in the target attribute list and manipulation constraint.

As an example implementation for the MO identifier, Local Distinguish Name (LDN) could be used for as identifier, for instance, "ManagedElement=1 ;NodeBFunction" indicates all NodeBFunction MOs under ManagedElement=1 MO. The alias name could use any word that is different as other aliases in the Manipulation Entry, for instance "a" could be used as the alias for "ManagedElement=1 ;NodeBFunction".

Fig. 8 shows a diagram of an example of the target attribute list according to the present disclosure. The target attribute list is not needed in delete operation, may or may not be needed in read operation, and is needed for update and create operations.

As illustrated in Fig. 8, the target attribute list may consist of a list of MO attribute name-value pairs. Each MO attribute name-value pair may consist of an MO attribute name and a corresponding MO attribute value. The MO attribute name may indicate an attribute for one MO in the target MO list and the corresponding MO attribute value may indicate a value of the attribute used in the MO operation corresponding to the manipulation entry. For example, the MO attribute value may provide the value used for the attribute in a create/update operation and it may be a fixed text value or an expression text which shall be evaluated later in the Agent. A preferred example for the value expression format may be seen as below:

$$
\begin{aligned}
\text{<Attribute Value>} = \ & \text{<Character>} \\
& | \ \text{<Attribute Name>} \\
& | \ \text{<Attribute Name>[<Operator><Attribute Name>]*[<Operator><Character>]*}
\end{aligned}
$$

$$\ldots\ldots(1)$$

Here, <Attribute Name> is a MO attribute name, <Operator> is a mathematics operation code like "+", "-", "*" or "/", and <Character> may be a number or a text string depending on what may be a value or part of value for the MO attribute. Attribute value expression may be either a single <Character> or an <Attribute Name>, or a combination of one or more <Attribute Name> with one or more <Character> by through one or more <Operator> linked together.

An example for a MO attribute name-value pair to increment value for attribute **berAllowed** in **NodeBFunction** may be:

$$\text{"}\textbf{a.berAllowed = a.berAllowed +1}\text{"}. \qquad \ldots\ldots(2)$$

Here, "a" is the alias for **NodeBFunction** MO, **berAllowed** is an attribute in **NodeBFunction,** and **"a.berAllowed +1"** is the attribute value shall be used.

The manipulation constraint may include one or more conditions for the MO operation corresponding to the manipulation entry, or one or more relationships between two or more MOs in the target MO list, or the both. Preferably, the definition of relationships between MOs here may involve any MO in the target MO list. This may overcome the limitation that only containment (parent-child) relationship could be used in the selection procedure. For example, the manipulation constraint may be an expression text which indicates the relationship between MOs and/ or the pre-conditions for the management action. It may be used to filter MOs from the possible MO list as defined in the target MO list. For each MO as listed in the target MO list, an operation/ action defined in the manipulation identifier will be executed for the MO only if the MO matches the constraint.

Preferably, the relationships between MOs may involve relationships between MOs, which are not selected MOs in the selection procedure. This may overcome the limitation of constraints only applied to selected MOs in the selection procedure.

An example of the manipulation constraint may be depicted as below:

<Manipulation Constraint> =

[<Constraint Entry> <Operand>]* <Constraint Entry>

…… (3)

As illustrated in the above, <Manipulation Constraint> contains a list of <Constraint Entry>-<Operand> pair and a single <Constraint Entry> in the end. The symbol "*" here denotes there may be one or more [<Constraint Entry><Operand>]. The list of <Constraint Entry>-<Operand> pair may be empty. <Operand> represents a logical calculation "AND" or "OR". <Constraint Entry> is a logical expression which may be calculated as a result of TRUE or FALSE. As an example, <Constraint Entry> may be illustrated as below:

<Constraint Entry> = <Attribute Name> <Opercode> <Attribute Value>

…… (4)

As illustrated, <Constraint Entry> may consist of <Attribute Name>, <Opercode> and <Attribute Value>. Here, <Attribute Name> may be an MO attribute name, <Attribute Value> may be an expression text as described in the above expression (1). The <Opercode> here is a comparison identifier which is used to compare the real value of the <Attribute Name> and the intended value as given in the <Attribute Value>. In an example implementation, the <Opercode> may contain "=", ">", "<", "!=", ">=" and "<=".

Fig. 9 shows a first example of a manipulation entry according to the present disclosure. In the example as illustrated in Fig. 9, the manipulation entry includes a manipulation identifier of "Select", a target MO list "ManagedElement=1; NodeBFunction", and a manipulation constraint of "a.berAllowed>10 and a.userLabel=NodeB257". The manipulation entry is to perform a "Select" operation of selecting MOs, which satisfies both of the conditions "a.berAllowed>10" and "a.userLabel=NodeB257", among all NodeBFunction MOs under ManagedElement=1 MO.

Fig. 10 shows a second example of a manipulation entry according to the present disclosure. In the example as illustrated in Fig. 10, the manipulation entry includes a manipulation identifier of "Update", a target MO list of "ManagedElement=1; NodeBFunction", a target attribute list of "a.berAllowed=a.berAllowed +1", and a manipulation constraint of "a.berAllowed>10". The manipulation entry is to perform a "Update" operation with an attribute of a value "a.berAllowed=a.berAllowed +1"on a MO, which satisfies the condition "a.berAllowed>10", among all NodeBFunction MOs under ManagedElement=1 MO.

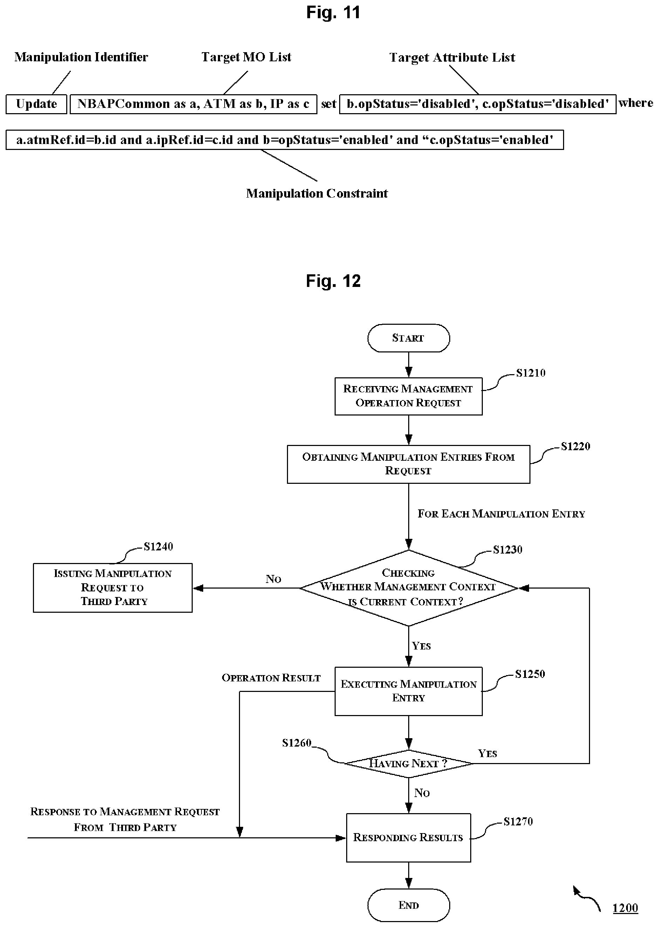

Fig. 11 shows a third example of a manipulation entry according to the present disclosure. In this example, the manipulation entry according to the present disclosure may be applied in the case of updating transport termination situation as mentioned in foregoing Background. Assume "NBAPCommon" is the MOC of NBAP Common Procedure in the RBS, which has two reference attributes named "atmRef" and "ipRef" pointing to MOC "ATM" and "IP" respectively, and both "ATM" and "IP" have an attribute "opStatus" to indicate if it's enabled or disabled.

As shown in Fig. 11, the manipulation entry includes a manipulation identifier of "Update", a target MO list of "NBAPCommon as a, ATM as b, IP as c", a target attribute list of "b.opStatus='disabled', c.opStatus='disabled'", and a manipulation constraint of "a.atmRef.id=b.id and a.ipRef.id=c.id and b=opStatus='enabled' and "c.opStatus='enabled'". The manipulation constraint here includes four filter conditions, i.e., "a.atmRef.id=b.id", "a.ipRef.id=c.id", "b=opStatus='enabled'", and "c.opStatus='enabled'". As illustrated, the manipulation entry in this example is to perform a "Update" operation with an attribute of a value "b.opStatus='disabled', c.opStatus='disabled'", on MOs, which satisfy the above four filter conditions, among MOs as indicated by the target MO list.

The three examples as shown in Figs. 9-11 are only provided for illustration, and various appropriate examples may be applied in the present disclosure.

Fig. 12 shows a flowchart of a method 1200 for performing MO operations at a server side according to an embodiment of the present disclosure. The method 1200 may be performed in the context as illustrated in Fig. 2.

In step S1210, the Agent 220 may receive a management operation request containing one or more manipulation entries from the Manager 210.

In step S1220, the Agent 220 may obtain/ extract the manipulation entries from the request based on the structure as illustrated in Fig. 5. For each manipulation entry, the Agent 220 may check whether the management context for target MOs is the current context or not (step S1230), for example, by extracting the target MO list based on the structure as illustrated in Fig. 6. In a preferred example of implementation, the management context information may be identified by LDN of the MO Identifiers as defined in the manipulation entry.

If the management context is not in the current context of the Agent 220, the method 1200 proceeds to step S1240. In step S1240, the Agent 220 may issue another management request, which contains information on the manipulation entry, to a third server which is capable of handling the manipulation entry based on the management context information. In this case, the Agent 220 represents as a Manager in the other hierarchical network management system in addition to the Agent role in the current network management system hierarchy.

As a result of step S1240, a response to the other management request may be received from the third party, and the response will be a part of a final result to be responded to the Manager 210.

Further for the result of step S1240, if it's an error result, the whole procedure will be broken to respond the error result to the client, the remaining manipulation entries following the current one will not be executed.

If the management context is in the current context of the Agent 220, the Agent 220 may execute the manipulation entry (step S1250), i.e., to perform an MO operation corresponding to the manipulation entry. The details on step S1250 will be described in below.

Similarly, if an operation result of step S1250 is an error result, the whole procedure will be also broken to respond the error result to the Manager 210, and the remaining manipulation entries following the current one will not be executed.

If the operation result of step S1250 is not an error result, the method 1200 may proceed to step S1260, where it is judged whether there are remaining manipulation entries unhandled. If yes, the procedure will turn tack to step S1230. Otherwise, the final result containing results from executions of all the manipulation entries will be responded to the Manager 210 in step S1270.

As mentioned above, the final result may include any correct result from the third party and any correct result executed by the Agent 220 itself.

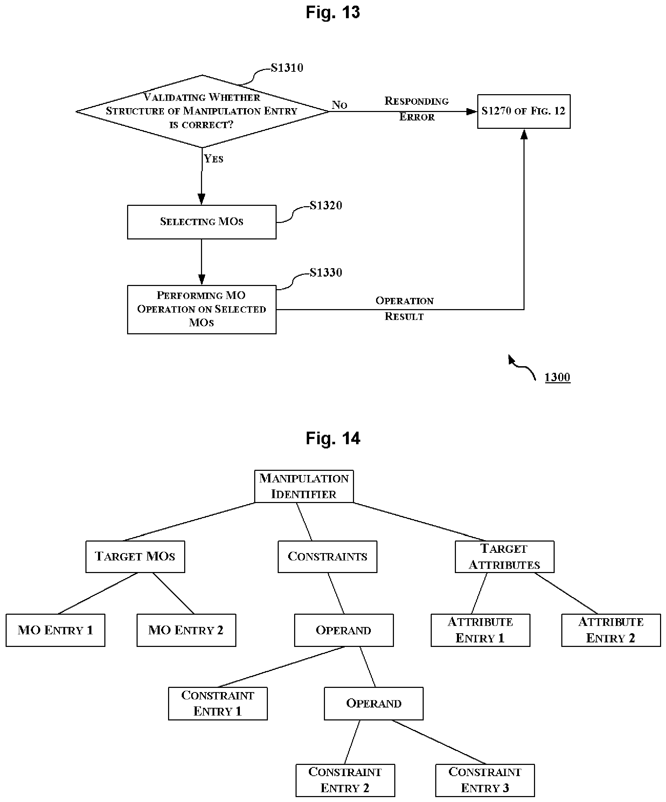

Fig. 13 shows a flowchart of an exemplary method 1300 for depicting step S1250 in detail according to an embodiment of the present disclosure.

In an optional step 1310, the Agent 220 may validate a structure of the manipulation entry, so as to ensure correctness of the structures as described in Fig. 5 to Fig. 11 and the above expressions (1) to (4).

In a non-limiting example, the Agent 220 may check a manipulation Identifier, a target MO list, a target attribute list and a manipulation constraint as defined in the manipulation entry, and verify if each item has followed the specific rules. If the result is not OK, an error may be responded to the Manager (i.e. the block S1270 of Fig. 12) and the execution procedure will be broken.

If the validation result is OK, the Agent 220 may select one or more MOs based on the target MO list indicated by the manipulation entry, or based on a target MO list and a manipulation constraint indicated by the corresponding manipulation entry (step S1320). In this case, the Agent 220 may perform the MO operation for the one or more selected MOs either based on a type of the MO operation indicated by the manipulation entry, or based on a type of the MO operation indicated by the manipulation entry, or based on a type of the MO operation and one or more target attributes indicated by the manipulation entry (step S1330).

In a preferred example, the step S1320 may be implemented by creating an Abstract Syntax Tree (AST) for the manipulation entry. In this example, the AST tree will be used as a basis for upcoming handling about the manipulation entry.

Fig. 14 shows an exemplary structure of the AST tree according to the present disclosure. As shown in Fig. 14, the root node of the tree is Manipulation Identifier which contains the identifier information of Manipulation Entry, followed by the root node, there are three child trees as name as Target MOs, Constraints and Target Attributes which respectively represents the Target MO List, Manipulation Constraint and Target

Attribute List of the Manipulation Entry. MO Entry node has the information of MO Identifier - Alias pair which is described in Fig. 7. Attribute Entry node has the information of MO Attribute Name-Value pair which is described in Fig. 8. In the Operand sub-tree under Constraints node, the Operand node itself contains Operand information for each Constraint Entry described in the expression (3) as above, it contains at most two Constraint Entry sub-nodes, or another Operand sub-tree, the Constraint Entry node represents the Constraint Entry in the expression (4) as above.

With the AST tree as shown in Fig. 14, the Agent 220 may retrieve all possible MO data from MIB. This could be done based on the Target MOs node of the tree or a combination of the Target MOs and Constraints nodes sometimes.

With the retrieved MOs data, the Agent 220 may further filter out all MOs which cannot match the manipulation constraint. This may be done by passing the MOs data to the AST tree, and traversing the whole tree to check if the manipulation constraint could be matched with the data. As non-limiting example of traversing, this could be done by a bottom-up traversal algorithm, such as the postorder traversal.

Once the manipulation constraint is matched with the MOs data, the Agent 220 may execute the intended operations specified by the Manipulation Identifier as well as the Target Attributes, based on the Manipulation Identifier, a create, read, update or delete operation could be judged, if the Target Attributes exist, then the detail attributes of the target MOs for create, read or update are further decided, based on the attribute value information defined in the Manipulation Entry, along with the matched MOs data, each attribute value which will be operated against the MIB could be calculated.

For example, the attribute value of "a.berAllowed = a.berAllowed +1" previously mentioned indicates an increment 1 based on current berAllowed attribute, the execution in step S1330 may work as below:
For each NodeBFunction MO data which matches the Constraints, generate an update operation for the NodeBFunction MO against the MIB with:

    1.) Retrieve the current berAllowed attribute value from the matched NodeBFunction MO data.
    2.) Set the new value as the current value+1.
    3.) Execute the operation against MIB.

After step S1330 has a result from MIB about the operation execution, the result will be reported to the block S1270 of Fig. 12.

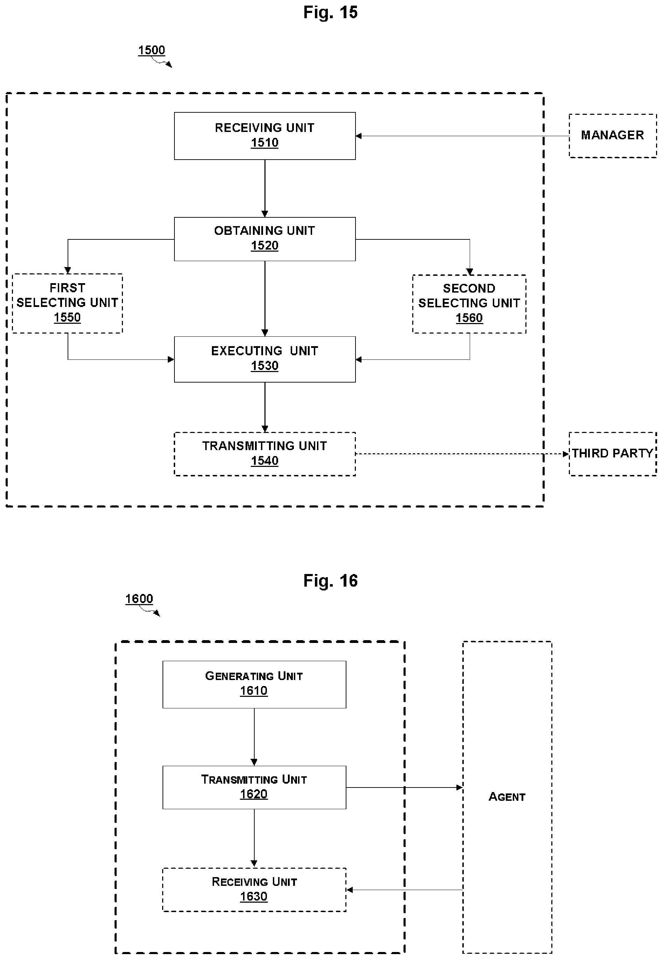

Fig. 15 shows a schematic diagram of an apparatus 1500 for performing one or more MO operations according to an embodiment of the present disclosure.

As shown in Fig. 15, the apparatus 1500 may include a receiving unit 1510, an obtaining unit 1520, an executing unit 1530, a transmitting unit 1540, a first selection unit 1550, and a second selection unit 1560. The transmitting unit 1540, the first selection unit 1550, and the second selection unit 1560 are optional and denoted in dotted lines as shown in Fig. 15.

The receiving unit 1510 may be configured to receive a request for the MO operations. The request may include one or more manipulation entries, and each entry corresponds to each of the MO operations. Alternatively, the manipulation entries may correspond to the MO operations in one-to-one correspondence.

The obtaining unit 1520 may be configured to obtain the manipulation entries from the received request, and the executing unit 1530 configured to, for each of said one or more manipulation entries, perform an MO operation corresponding to the manipulation entry.

As a non-limiting example, each of the manipulation entries may include a manipulation identifier and a target MO list. The manipulation identifier may indicate a type of the MO operation corresponding to the manipulation entry, and the target MO list may indicate a list of one or more MOs which are targets of the MO operation corresponding to the manipulation entry.

Alternatively, each of the manipulation entries may further include a list of MO attribute name-value pairs, or a manipulation constraint, or both. Each MO attribute name-value pair may consist of an MO attribute name and a corresponding MO attribute value. The MO attribute name may indicate an attribute for one MO in the target MO list and the corresponding MO attribute value may indicate a value of the attribute used in the MO operation corresponding to the manipulation entry. The manipulation constraint may include one or more conditions for the MO operation corresponding to the manipulation entry. The manipulation constraint may include one or more relationships between two or more MOs in the target MO list. The manipulation constraint may include one or more conditions and one or more relationships described above, or both.

Preferably, the definition of relationships between MOs here may involve any MO in the target MO list. This may overcome the limitation that only containment (parent-child) relationship could be used in the selection procedure.

Preferably, the relationships here may involve relationships between MOs, which are not selected MOs in the selection procedure. This may overcome the limitation of constraints only applied to selected MOs in the selection procedure.

As a non-limiting example, the obtaining unit 1520 may be further configured to obtain a management context from the received request before the executing unit 1530 performs the corresponding MO operation. In this case, the apparatus 1500 may further include a checking unit (not shown) configured to check if the management context is in a current context for a device receiving the request. Alternatively, the transmitting unit 1540 may be configured to transmit, to a third party capable of handling the manipulation entry, a management request containing the manipulation entry if it is checked by the checking unit that the management context is not in the current context, and the receiving unit 1510 may be further configured to receive, from the third party, a response to the management request.

As another non-limiting example, the first selection unit 1550 may be configured to select one or more MOs based on a target MO list indicated by the manipulation entry before the executing unit performs the corresponding MO operation. In this case, the executing unit 1530 may be configured to perform the MO operation corresponding to the manipulation entry by: performing the MO operation for the one or more selected MOs based on a type of the MO operation indicated by the manipulation entry.

As yet another non-limiting example, the second selection unit 1560 may be configured to select one or more MOs based on a target list and a manipulation constraint indicated by the corresponding manipulation entry. In this case, the executing unit 1530 may be configured to perform the MO operation corresponding to the manipulation entry by: performing the MO operation for the one or more selected MOs based on a type of the MO operation indicated by the manipulation entry, or based on a type of the MO operation and one or more target attributes indicated by the manipulation entry.

As still another non-limiting example, the transmitting unit 1540 may be further configured to respond results of the one or more MO operations.

Fig. 16 shows a schematic diagram of an apparatus 1600 for requesting one or more MO operations according to an embodiment of the present disclosure.

As shown in Fig. 16, the apparatus 1600 may include a generating unit 1610, a transmitting obtaining unit 1620, and a receiving unit 1630. The receiving unit 1650 may be optional and denoted in dotted lines as shown in Fig. 16.

The generating unit 1610 may be configured to generate one or more manipulation entries based on said one or more MO operations. Each of the one or more manipulation entries correspond to each of said one or more MO operations. As an example, the manipulation entries may correspond to the MO operations in one-to-one correspondence.

The transmitting unit 1620 may be configured to transmit a request for said one or more MO operations. The request may include the one or more manipulation entries.

As a non-limiting example, each of the manipulation entries may include a manipulation identifier and a target MO list. The manipulation identifier may indicate a type of the MO operation corresponding to the manipulation entry, and the target MO list may indicate a list of one or more MOs which are targets of the MO operation corresponding to the manipulation entry.

Alternatively, each of the manipulation entries may further include a list of MO attribute name-value pairs, or a manipulation constraint, or both. Each MO attribute name-value pair may consist of an MO attribute name and a corresponding MO attribute value. The MO attribute name may indicate an attribute for one MO in the target MO list and the corresponding MO attribute value may indicate a value of the attribute used in the MO operation corresponding to the manipulation entry. The manipulation constraint may include one or more conditions for the MO operation corresponding to the manipulation entry. The manipulation constraint may include one or more relationships between two or more MOs in the target MO list. The manipulation constraint may include one or more conditions and one or more relationships described above, or both.

Preferably, the definition of relationships between MOs here may involve any MO in the target MO list. This may overcome the limitation that only containment (parent-child) relationship could be used in the selection procedure.

Preferably, the relationships here may involve relationships between MOs, which are not selected MOs in the selection procedure. This may overcome the limitation of constraints only applied to selected MOs in the selection procedure.

As another non-limiting example, the receiving unit 1630 may be configured to receive results of said one or more MO operations from a device receiving the request, for example the Agent 220 as shown in Fig. 2.

It should be noted that two or more different units in this disclosure may be logically or physically combined. For example, the first selection unit 1550 and the second 1560 may be combined as one single unit, and the transmitting unit 1620 and the transmitting unit 1630may be combined as one single unit.

According to foregoing embodiments of the present disclosure, the present disclosure may achieve at least one of the following advantages:

- Overcoming the limitation that only containment (parent-child) relationship could be used in selection procedure;
- Overcoming the limitation of constraints only applied to selected MOs in selection procedure;
- Increment/Decrement MO attribute value with only one management request;
- Significantly reducing the number of management requests needed for MO manipulation operations, thereby significantly reducing the communication traffic overhead between Manager and Agent;
- Enabling a flexible and ease of use approach to develop management activities for NEs in the whole NE lifecycle;
- Simplifying the management activity artifact significantly as the invention enabling complex MOs logical handling inside the Manipulation Entry, which will be automatically evaluated in the Agent;
- Reducing the needed development effort significantly as the management activity artifact is significantly simplified; and
- Improving the quality of management activity artifact as the complexity of the artifact is reduced, for instance the correctness.

Other arrangements of the present disclosure include software programs performing the steps and operations of the method embodiments, which are firstly generally described and then explained in detail. More specifically, a computer program product is such an embodiment, which includes a computer-readable medium with a computer program logic encoded thereon. The computer program logic provides corresponding operations to provide the above described MO operation execution scheme when it is executed on a computing device. The computer program logic enables at least one processor of a computing system to perform the operations (the methods) of the embodiments of the present disclosure when it is executed on the at least one processor. Such arrangements of the present disclosure are typically provided as: software, codes, and/or other data structures provided or encoded on a computer-readable medium such as optical medium (e.g., CD-ROM), soft disk, or hard disk; or other mediums such as firmware or microcode on one or more ROM or RAM or PROM chips; or an Application Specific Integrated Circuit (ASIC); or downloadable software images and share database, etc., in one or more modules. The software, hardware, or such arrangements can be mounted on computing devices, such that one or more processors in the computing device can perform the technique described by the embodiments of the present disclosure. Software process operating in combination with e.g., a group of data communication devices or computing devices in other entities can also provide the nodes and host of the present disclosure. The nodes and host according to the present disclosure can also be distributed among a plurality of software processes on a plurality of data communication devices, or all software processes running on a group of mini specific computers, or all software processes running on a single computer.

ABBREVIATIONS

| | |
|---|---|
| 3GPP | The 3rd Generation Partnership Project |
| API | Application Program Interface |
| AST | Abstract Syntax Tree |
| ATM | Asynchronous Transfer Mode |
| CMIP | Common Management Information Protocol |
| CORBA | Common Object Request Broker Architecture |
| CRUD | Create, Read, Update and Delete |
| DM | Domain Manager |
| DML | Data Manipulation Language |
| EM | Element Manager |
| EJB | Enterprise Java Bean |
| GUI | Graphical User Interface |
| MD | Managed Object Manipulation Description |
| MIB | Managed Information Base |
| MO | Managed Object |
| MOC | Managed Object Class |
| NBI | NorthBound Interface |
| NE | Network Element |
| NM | Network Management |
| NMS | Network Management System |
| IIOP | Internet Inter-ORB Protocol |
| IP | Internet Protocol |
| IRP | Integration Reference Point |
| ITU-T | International Telecommunication Union - Telecommunication Standardization |
| I&V | Integration and Verification |
| LDN | Local Distinguish Name |
| OAM&P | Operations, Administration, Maintenance, and Provisioning |
| RBS | Radio Base Station |
| RDBMS | Relational Database Management Systems |
| REST | Representational State Transfer |
| SBI | SouthBound Interface |
| SNMP | Simple Network Management Protocol |
| SOAP | Simple Object Access Protocol |
| SQL | Structured Query Language |
| TMN | Telecommunications Management Network |
| WCDMA | Wideband Code Division Multiple Access |

REFERENCES

[1] "NETWORK MANAGEMENT FILTER SYSTEM", US20090254606A1, October 8, 2009;
[2] "MANIPULATION OF NETWORK MANAGEMENT INFORMATION", US20090313307A1, December 17, 2009;
[3] "CMIS/P++: Extensions to CMIS/P for Increased Expressiveness and Efficiency in the Manipulation of Management Information", IEEE Network, September/ October 1998.

**Claims**

1. A method (300) performed by an agent of a network management system for performing one or more managed object, MO, operations, the method comprising:

   receiving (310) a request for said one or more MO operations, the request including two or more manipulation entries, each of said two or more manipulation entries corresponding to each of said one or more MO operations, wherein each of said two or more manipulation entries includes:

   a manipulation identifier, indicating a type of the MO operation corresponding to the manipulation entry; and a target MO list, indicating a list of MOs which are targets of the MO operation corresponding to the manipulation entry;

   obtaining (320) said two or more manipulation entries from the received request; and for each of said two or more manipulation entries, performing (330) an MO operation corresponding to the manipulation entry.

2. The method according to claim 1, wherein each of said two or more manipulation entries further includes:

   a list of MO attribute name-value pairs, each MO attribute name-value pair consisting of an MO attribute name and a corresponding MO attribute value, the MO attribute name indicating an attribute for one MO in the target MO list and the corresponding MO attribute value indicating a value of the attribute used in the MO operation corresponding to the manipulation entry; and/ or a manipulation constraint, including:

   one or more conditions for the MO operation corresponding to the manipulation entry; and/ or one or more relationships between two or more MOs in the target MO list.

3. The method according to claim 1, before performing the MO operation corresponding to the manipulation entry, further comprising:

   obtaining a management context from the received request; and checking if the management context is in a current context for a device receiving the request.

4. The method according to claim 3, further comprising:

   transmitting, to a third party capable of handling the manipulation entry, a management request containing the manipulation entry if the management context is not in the current context; and receiving, from the third party, a response to the management request.

5. The method according to claim 1, for each of said two or more manipulation entries, before performing the MO operation corresponding to the manipulation entry, the method further comprising:

   selecting one or more MOs based on a target MO list indicated by the manipulation entry, wherein performing the MO operation corresponding to the manipulation entry comprises: performing the MO operation for the one or more selected MOs based on a type of the MO operation indicated by the manipulation entry.

6. The method according to claim 1, for each of said two or more manipulation entries, before performing the MO operation corresponding to the manipulation entry, the method further comprising:

   selecting one or more MOs based on a target MO list and a manipulation constraint indicated by the corresponding manipulation entry, wherein performing the MO operation corresponding to the manipulation entry comprises: performing the MO operation for the one or more selected MOs based on a type of the MO operation indicated by the manipulation entry, or based on a type of the MO operation and one or more target attributes indicated by the manipulation entry.

7. The method according to claim 1, further comprising:
responding results of said one or more MO operations.

8. A method (400) performed by a manager of a network management system for requesting one or more managed object, MO, operations, comprising:

generating (410) two or more manipulation entries based on said one or more MO operations, each of said two or more manipulation entries corresponding to each of said one or more MO operations, wherein each of said two or more manipulation entries includes:

a manipulation identifier, indicating a type of the MO operation corresponding to the manipulation entry; and
a target MO list, indicating a list of MOs which are targets of the MO operation corresponding to the manipulation entry; and

transmitting (420) a request for said one or more MO operations, the request including said two or more manipulation entries.

9. The method according to claim 8, wherein each of said two or more manipulation entries further includes:

a list of MO attribute name-value pairs, each MO attribute name-value pair consisting of an MO attribute name and a corresponding MO attribute value, the MO attribute name indicating an attribute for one MO in the target MO list and the corresponding MO attribute value indicating a value of the attribute used in the MO operation corresponding to the manipulation entry; and/ or
a manipulation constraint, including:

one or more conditions for the MO operation corresponding to the manipulation entry; and/ or
one or more relationships between two or more MOs in the target MO list.

10. An apparatus (220, 1500) for performing one or more managed object, MO, operations in a network management system, the apparatus comprising:

a receiving unit (1510) configured to receive a request for said one or more MO operations, the request including two or more manipulation entries, each of said two or more manipulation entries corresponding to each of said one or more MO operations, wherein each of said two or more manipulation entries includes:

a manipulation identifier, indicating a type of the MO operation corresponding to the manipulation entry; and
a target MO list, indicating a list of MOs which are targets of the MO operation corresponding to the manipulation entry;

an obtaining unit (1520) configured to obtain said two or more manipulation entries from the received request; and
an executing unit (1530) configured to, for each of said two or more manipulation entries, perform an MO operation corresponding to the manipulation entry.

11. The apparatus according to claim 10, wherein each of said two or more manipulation entries further includes:

a list of MO attribute name-value pairs, each MO attribute name-value pair consisting of an MO attribute name and a corresponding MO attribute value, the MO attribute name indicating an attribute for one MO in the target MO list and the corresponding MO attribute value indicating a value of the attribute used in the MO operation corresponding to the manipulation entry; and/ or
a manipulation constraint, including:

one or more conditions for the MO operation corresponding to the manipulation entry; and/ or
one or more relationships between two or more MOs in the target MO list.

12. The apparatus according to claim 10, wherein, the obtaining unit (1520) is further configured to obtain a management context from the received request before the executing unit (1530) performs the corresponding MO operation, and the apparatus further comprises a checking unit configured to check if the management context is in a current context for a device receiving the request.

**13.** The apparatus according to claim 12, further comprising:

a transmitting unit (1540) configured to transmit, to a third party capable of handling the manipulation entry, a management request containing the manipulation entry if it is checked by the checking unit that the management context is not in the current context,

wherein the receiving unit (1510) is further configured to receive, from the third party, a response to the management request.

**14.** The apparatus according to claim 10, further comprising:

a first selection unit (1550) configured to select one or more MOs based on a target MO list indicated by the manipulation entry before the executing unit (1530) performs the corresponding MO operation,

wherein the executing unit (1530) is configured to perform the MO operation corresponding to the manipulation entry by:

performing the MO operation for the one or more selected MOs based on a type of the MO operation indicated by the manipulation entry.

**15.** The apparatus according to claim 10, further comprising:

a second selection unit (1560) configured to select one or more MOs based on a target list and a manipulation constraint indicated by the corresponding manipulation entry,

wherein the executing unit (1530) is configured to perform the MO operation corresponding to the manipulation entry by:

performing the MO operation for the one or more selected MOs based on a type of the MO operation indicated by the manipulation entry, or based on a type of the MO operation and one or more target attributes indicated by the manipulation entry.

**16.** An apparatus (210, 1600) for requesting one or more managed object, MO, operations in a network management system, comprising:

a generating unit (1610) configured to generate two or more manipulation entries based on said one or more MO operations, each of said two or more manipulation entries corresponding to each of said one or more MO operations, wherein each of said two or more manipulation entries includes:

a manipulation identifier, indicating a type of the MO operation corresponding to the manipulation entry; and
a target MO list, indicating a list of MOs which are targets of the MO operation corresponding to the manipulation entry; and

a transmitting unit (1620) configured to transmit a request for said one or more MO operations, the request including said two or more manipulation entries.

**17.** The apparatus according to claim 16, wherein each of said two or more manipulation entries further includes:

a list of MO attribute name-value pairs, each MO attribute name-value pair consisting of an MO attribute name and a corresponding MO attribute value, the MO attribute name indicating an attribute for one MO in the target MO list and the corresponding MO attribute value indicating a value of the attribute used in the MO operation corresponding to the manipulation entry; and/ or
a manipulation constraint, including:

one or more conditions for the MO operation corresponding to the manipulation entry; and/ or
one or more relationships between two or more MOs in the target MO list.

**18.** The apparatus according to claim 16, further comprising:
a receiving unit (1630) configured to receive results of said one or more MO operations from a device receiving the request.

**19.** A computer storage medium having computer-executable instructions stored thereon which, when executed by a computer, adapt the computer to perform the method according to any one of claims 1-9.

20. A data structure for use in requesting one or more managed object, MO, operations in a network management system, comprising two or more manipulation entries, each of said two or more manipulation entries correspond to each of said one or more MO operations, where each of said two or more manipulation entries includes:

a manipulation identifier, indicating a type of the MO operation corresponding to the manipulation entry; and a target MO list, indicating a list of MOs which are targets of the MO operation corresponding to the manipulation entry.

21. The data structure according to claim 20, wherein each of said two or more manipulation entries further includes:

a list of MO attribute name-value pairs, each MO attribute name-value pair consisting of an MO attribute name and a corresponding MO attribute value, the MO attribute name indicating an attribute for one MO in the target MO list and the corresponding MO attribute value indicating a value of the attribute used in the MO operation corresponding to the manipulation entry; and/ or a manipulation constraint, including:

one or more conditions for the MO operation corresponding to the manipulation entry; and/ or one or more relationships between two or more MOs in the target MO list.

**Patentansprüche**

1. Verfahren (300), das von einem Agenten eines Netzwerkverwaltungssystems durchgeführt wird, zur Durchführung einer oder mehrerer Operationen für verwaltete Objekte, MO, wobei das Verfahren umfasst:

Empfangen (310) einer Anforderung der einen oder der mehreren MO-Operationen, wobei die Anforderung zwei oder mehr Manipulationseinträge umfasst, und jeder der zwei oder mehr Manipulationseinträge einer jeden der einen oder der mehreren MO-Operationen entspricht, wobei jeder der zwei oder mehr Manipulationseinträge umfasst:

eine Manipulationskennung, die einen Typ der MO-Operation angibt, die dem Manipulationseintrag entspricht; und eine Ziel-MO-Liste, die eine Liste von MOs angibt, die Ziele der MO-Operation sind, die dem Manipulationseintrag entspricht;

Abrufen (320) der zwei oder mehr Manipulationseinträge aus der empfangenen Anforderung; und Durchführen (330) für jeden der zwei oder mehr Manipulationseinträge einer MO-Operation, die dem Manipulationseintrag entspricht.

2. Verfahren nach Anspruch 1, wobei jeder der zwei oder mehr Manipulationseinträge ferner umfasst:

eine Liste von MO-Attribut-Name/Wert-Paaren, wobei jedes MO-Attribut-Name/Wert-Paar aus einem MO-Attributnamen und einem entsprechenden MO-Attributwert besteht, der MO-Attributname ein Attribut für ein MO in der Ziel-MO-Liste angibt, und der entsprechende MO-Attributwert einen Wert des Attributs angibt, das in der MO-Operation verwendet wird, die dem Manipulationseintrag entspricht; und/oder eine Manipulationsbeschränkung, umfassend:

eine oder mehrere Bedingungen für die MO-Operation, die dem Manipulationseintrag entspricht; und/oder eine oder mehrere Beziehungen zwischen zwei oder mehr MOs in der Ziel-MO-Liste.

3. Verfahren nach Anspruch 1, ferner umfassend vor dem Durchführen der MO-Operation, die dem Manipulationseintrag entspricht:

Abrufen eines Verwaltungskontexts aus der empfangenen Anforderung; und Prüfen, ob die Verwaltungskontext in einem aktuellen Kontext für ein Gerät ist, das die Anforderung empfängt.

4. Verfahren nach Anspruch 3, ferner umfassend:

Senden einer Verwaltungsanforderung, die den Manipulationseintrag enthält, an einen Dritten, der zum Handhaben des Manipulationseintrags imstande ist, wenn der Verwaltungskontext nicht im aktuellen Kontext ist; und Empfangen einer Antwort vom Dritten auf die Verwaltungsanforderung.

5. Verfahren nach Anspruch 1, wobei das Verfahren für jeden der zwei oder mehr Manipulationseinträge vor dem Durchführen der MO-Operation, die dem Manipulationseintrag entspricht, ferner umfasst:

Auswählen eines oder mehrerer MOs basierend auf einer Ziel-MO-Liste, die durch den Manipulationseintrag angegeben wird;
wobei das Durchführen der MO-Operation, die dem Manipulationseintrag entspricht, umfasst:
Durchführen der MO-Operation für das eine oder die mehreren ausgewählten MOs basierend auf einem Typ der MO-Operation, der durch den Manipulationseintrag angegeben wird.

6. Verfahren nach Anspruch 1, wobei das Verfahren für jeden der zwei oder mehr Manipulationseinträge vor dem Durchführen der MO-Operation, die dem Manipulationseintrag entspricht, ferner umfasst:

Auswählen eines oder mehrerer MOs basierend auf einer Ziel-MO-Liste und einer Manipulationsbeschränkung, die durch den Manipulationseintrag angegeben werden;
wobei das Durchführen der MO-Operation, die dem Manipulationseintrag entspricht, umfasst:
Durchführen der MO-Operation für das eine oder die mehreren ausgewählten MOs basierend auf einem Typ der MO-Operation, der durch den Manipulationseintrag angegeben wird, oder basierend auf einem Typ der MO-Operation und einem oder mehreren Zielattributen, die durch den Manipulationseintrag angegeben werden.

7. Verfahren nach Anspruch 1, ferner umfassend:
Reagieren auf Ergebnisse der einen oder der mehreren MO-Operationen.

8. Verfahren (400), das von einem einen Verwalter eines Netzwerkverwaltungssystems durchgeführt wird, zur Durchführung einer oder mehrerer Operationen für verwaltete Objekte, MO, umfassend:

Erzeugen (410) zweier oder mehrerer Manipulationseinträge basierend auf der einen oder den mehreren MO-Operationen, wobei jeder der zwei Manipulationseinträge einer jeden der einen oder der mehreren MO-Operationen entspricht, wobei jeder der zwei oder mehr Manipulationseinträge umfasst:

eine Manipulationskennung, die einen Typ der MO-Operation angibt, die dem Manipulationseintrag entspricht; und
eine Ziel-MO-Liste, die eine Liste von MOs angibt, die Ziele der MO-Operation sind, die dem Manipulationseintrag entspricht; und

Senden (420) einer Anforderung der einen oder der mehreren MO-Operationen, wobei die Anforderung die zwei oder mehr Manipulationseinträge umfasst.

9. Verfahren nach Anspruch 8, wobei jeder der zwei oder mehr Manipulationseinträge ferner umfasst:

eine Liste von MO-Attribut-Name/Wert-Paaren, wobei jedes MO-Attribut-Name/Wert-Paar aus einem MO-Attributnamen und einem entsprechenden MO-Attributwert besteht, der MO-Attributname ein Attribut für ein MO in der Ziel-MO-Liste angibt, und der entsprechende MO-Attributwert einen Wert des Attributs angibt, das in der MO-Operation verwendet wird, die dem Manipulationseintrag entspricht; und/oder
eine Manipulationsbeschränkung, umfassend:

eine oder mehrere Bedingungen für die MO-Operation, die dem Manipulationseintrag entspricht; und/oder
eine oder mehrere Beziehungen zwischen zwei oder mehr MOs in der Ziel-MO-Liste.

10. Vorrichtung (220, 1500) zum Durchführen einer oder mehrerer Operationen für verwaltete Objekte, MO, in einem Netzwerkverwaltungssystem, wobei die Vorrichtung umfasst:

eine Empfangseinheit (1510), die zum Empfangen einer Anforderung der einen oder der mehreren MO-Operationen konfiguriert ist, wobei die Anforderung zwei oder mehr Manipulationseinträge umfasst, und jeder der zwei Manipulationseinträge einer jeden der einen oder der mehreren MO-Operationen entspricht, wobei jeder der zwei oder mehr Manipulationseinträge umfasst:

eine Manipulationskennung, die einen Typ der MO-Operation angibt, die dem Manipulationseintrag entspricht; und

eine Ziel-MO-Liste, die eine Liste von MOs angibt, die Ziele der MO-Operation sind, die dem Manipulationseintrag entspricht;

eine Abrufeinheit (1520), die zum Abrufen der zwei oder mehr Manipulationseinträge aus der empfangenen Anforderung konfiguriert ist; und

eine Ausführeinheit (1530), die zum Durchführen einer MO-Operation, die dem Manipulationseintrag entspricht, für jeden der zwei oder mehr Manipulationseinträge konfiguriert ist.

**11.** Vorrichtung nach Anspruch 10, wobei jeder der zwei oder mehr Manipulationseinträge ferner umfasst:

eine Liste von MO-Attribut-Name/Wert-Paaren, wobei jedes MO-Attribut-Name/Wert-Paar aus einem MO-Attributnamen und einem entsprechenden MO-Attributwert besteht, der MO-Attributname ein Attribut für ein MO in der Ziel-MO-Liste angibt, und der entsprechende MO-Attributwert einen Wert des Attributs angibt, das in der MO-Operation verwendet wird, die dem Manipulationseintrag entspricht; und/oder
eine Manipulationsbeschränkung, umfassend:

eine oder mehrere Bedingungen für die MO-Operation, die dem Manipulationseintrag entspricht; und/oder
eine oder mehrere Beziehungen zwischen zwei oder mehr MOs in der Ziel-MO-Liste.

**12.** Vorrichtung nach Anspruch 10, wobei die Abrufeinheit (1520) ferner so konfiguriert ist, dass sie einen Verwaltungskontext aus der empfangenen Anforderung abruft, bevor die Ausführeinheit (1530) die entsprechende MO-Operation durchführt, und die Vorrichtung ferner eine Prüfeinheit umfasst, sie so konfiguriert ist, dass sie prüft, ob der Verwaltungskontext in einem aktuellen Kontext für ein Gerät ist, das die Anforderung empfängt.

**13.** Vorrichtung nach Anspruch 12, ferner umfassend:

eine Sendeeinheit (1540), die so konfiguriert ist, dass sie eine Verwaltungsanforderung, die den Manipulationseintrag enthält, an einen Dritten sendet, der zum Handhaben des Manipulationseintrags imstande ist, wenn der Verwaltungskontext nicht im aktuellen Kontext ist,
wobei die Empfangseinheit (1510) ferner zum Empfangen einer Antwort vom Dritten auf die Verwaltungsanforderung konfiguriert ist.

**14.** Vorrichtung nach Anspruch 10, ferner umfassend:

eine erste Auswahleinheit (1550), die so konfiguriert ist, dass sie ein oder mehrere MOs basierend auf einer Ziel-MO-Liste auswählt, die durch den Manipulationseintrag angegeben wird, bevor die Ausführeinheit (1530) die entsprechende MO-Operation durchführt,
wobei die Ausführeinheit (1530) ferner so konfiguriert ist, dass sie die MO-Operation, die dem Manipulationseintrag entspricht, durchführt durch:
Durchführen der MO-Operation für das eine oder die mehreren ausgewählten MOs basierend auf einem Typ der MO-Operation, der durch den Manipulationseintrag angegeben wird.

**15.** Vorrichtung nach Anspruch 10, ferner umfassend:

eine zweite Auswahleinheit (1560), die so konfiguriert ist, dass sie ein oder mehrere MOs basierend auf einer Ziel-MO-Liste und einer Manipulationsbeschränkung auswählt, die durch den Manipulationseintrag angegeben werden;
wobei die Ausführeinheit (1530) ferner so konfiguriert ist, dass sie die MO-Operation, die dem Manipulationseintrag entspricht, durchführt durch:
Durchführen der MO-Operation für das eine oder die mehreren ausgewählten MOs basierend auf einem Typ der MO-Operation, der durch den Manipulationseintrag angegeben wird, oder basierend auf einem Typ der MO-Operation und einem oder mehreren Zielattributen, die durch den Manipulationseintrag angegeben werden.

**16.** Vorrichtung (210, 1600) zum Anfordern einer oder mehrerer Operationen für verwaltete Objekte, MO, in einem Netzwerkverwaltungssystem, umfassend:

eine Erzeugungseinheit (1610), die zum Erzeugen zweier oder mehrerer Manipulationseinträge basierend auf der einen oder den mehreren MO-Operationen konfiguriert ist, wobei jeder der zwei Manipulationseinträge einer jeden der einen oder der mehreren MO-Operationen entspricht, wobei jeder der zwei oder mehr Manipulationseinträge umfasst:

eine Manipulationskennung, die einen Typ der MO-Operation angibt, die dem Manipulationseintrag entspricht; und
eine Ziel-MO-Liste, die eine Liste von MOs angibt, die Ziele der MO-Operation sind, die dem Manipulationseintrag entspricht; und

eine Sendeeinheit (1620), die zum Senden einer Anforderung der einen oder der mehreren MO-Operationen konfiguriert ist, wobei die Anforderung die zwei oder mehr Manipulationseinträge umfasst.

**17.** Vorrichtung nach Anspruch 16, wobei jeder der zwei oder mehr Manipulationseinträge ferner umfasst:

eine Liste von MO-Attribut-Name/Wert-Paaren, wobei jedes MO-Attribut-Name/Wert-Paar aus einem MO-Attributnamen und einem entsprechenden MO-Attributwert besteht, der MO-Attributname ein Attribut für ein MO in der Ziel-MO-Liste angibt, und der entsprechende MO-Attributwert einen Wert des Attributs angibt, das in der MO-Operation verwendet wird, die dem Manipulationseintrag entspricht; und/oder
eine Manipulationsbeschränkung, umfassend:

eine oder mehrere Bedingungen für die MO-Operation, die dem Manipulationseintrag entspricht; und/oder
eine oder mehrere Beziehungen zwischen zwei oder mehr MOs in der Ziel-MO-Liste.

**18.** Vorrichtung nach Anspruch 16, ferner umfassend:
eine Empfangseinheit (1630), die so konfiguriert ist, dass sie Ergebnisse der einen oder der mehreren MO-Operationen von einem Gerät empfängt, das die Anforderung empfängt.

**19.** Computerspeichermedium, das computerausführbare Anweisungen darauf gespeichert aufweist, die bei Ausführung durch einen Computer den Computer zum Durchführen des Verfahrens nach einem der Ansprüche 1 bis 9 einrichten.

**20.** Datenstruktur zur Verwendung beim Anfordern einer oder mehrerer Operationen für verwaltete Objekte, MO, in einem Netzwerkverwaltungssystem, umfassend zwei oder mehr Manipulationseinträge, wobei jeder der zwei Manipulationseinträge einer jeden der einen oder der mehreren MO-Operationen entspricht, wobei jeder der zwei oder mehr Manipulationseinträge umfasst:

eine Manipulationskennung, die einen Typ der MO-Operation angibt, die dem Manipulationseintrag entspricht; und
eine Ziel-MO-Liste, die eine Liste von MOs angibt, die Ziele der MO-Operation sind, die dem Manipulationseintrag entspricht.

**21.** Datenstruktur nach Anspruch 20, wobei jeder der zwei oder mehr Manipulationseinträge ferner umfasst:

eine Liste von MO-Attribut-Name/Wert-Paaren, wobei jedes MO-Attribut-Name/Wert-Paar aus einem MO-Attributnamen und einem entsprechenden MO-Attributwert besteht, der MO-Attributname ein Attribut für ein MO in der Ziel-MO-Liste angibt, und der entsprechende MO-Attributwert einen Wert des Attributs angibt, das in der MO-Operation verwendet wird, die dem Manipulationseintrag entspricht; und/oder
eine Manipulationsbeschränkung, umfassend:

eine oder mehrere Bedingungen für die MO-Operation, die dem Manipulationseintrag entspricht; und/oder
eine oder mehrere Beziehungen zwischen zwei oder mehr MOs in der Ziel-MO-Liste.

**Revendications**

**1.** Procédé (300) effectué par un agent d'un système de gestion de réseau pour effectuer une ou plusieurs opérations d'objets gérés, MO, le procédé comprenant :

la réception (310) d'une demande pour lesdites une ou plusieurs opérations MO, la demande incluant au moins deux entrées de manipulation, chacune desdites au moins deux entrées de manipulation correspondant à chacune desdites une ou plusieurs opérations MO, dans lequel chacune desdites au moins deux entrées de manipulation inclut :

un identifiant de manipulation, indiquant un type de l'opération MO correspondant à l'entrée de manipulation ; et

une liste de MO cibles, indiquant une liste de MO qui sont des cibles de l'opération MO correspondant à l'entrée de manipulation ;

l'obtention (320) desdites au moins deux entrées de manipulation à partir de la demande reçue ; et
pour chacune desdites au moins deux entrées de manipulation, l'exécution (330) d'une opération MO correspondant à l'entrée de manipulation.

2. Procédé selon la revendication 1, dans lequel chacune desdites au moins deux entrées de manipulation inclut en outre :

une liste de paires de nom-valeur d'attribut MO, chaque paire de nom-valeur d'attribut MO se composant d'un nom d'attribut MO et d'une valeur d'attribut MO correspondante, le nom d'attribut MO indiquant un attribut pour un MO dans la liste de MO cibles et la valeur d'attribut MO correspondante indiquant une valeur de l'attribut utilisé dans l'opération MO correspondant à l'entrée de manipulation ; et/ou
une contrainte de manipulation incluant :

une ou plusieurs conditions pour l'opération MO correspondant à l'entrée de manipulation ; et/ou
une ou plusieurs relations entre au moins deux MO dans la liste de MO cibles.

3. Procédé selon la revendication 1, avant l'exécution de l'opération MO correspondant à l'entrée de manipulation, comprenant en outre :

l'obtention d'un contexte de gestion à partir de la demande reçue ; et
le contrôle si le contexte de gestion est dans un contexte actuel pour un dispositif recevant la demande.

4. Procédé selon la revendication 3, comprenant en outre :

la transmission, à destination d'un tiers capable de traiter l'entrée de manipulation, d'une demande de gestion contenant l'entrée de manipulation si le contexte de gestion n'est pas dans le contexte actuel ; et
la réception, en provenance du tiers, d'une réponse à la demande de gestion.

5. Procédé selon la revendication 1, pour chacune desdites au moins deux entrées de manipulation, avant l'exécution de l'opération MO correspondant à l'entrée de manipulation, le procédé comprenant en outre :

la sélection d'un ou plusieurs MO sur la base d'une liste de MO cibles indiquée par l'entrée de manipulation, dans lequel l'exécution de l'opération MO correspondant à l'entrée de manipulation comprend :
l'exécution de l'opération MO pour les un ou plusieurs MO sélectionnés sur la base d'un type de l'opération MO indiquée par l'entrée de manipulation.

6. Procédé selon la revendication 1, pour chacune desdites au moins deux entrées de manipulation, avant l'exécution de l'opération MO correspondant à l'entrée de manipulation, le procédé comprenant en outre :

la sélection d'un ou plusieurs MO sur la base d'une liste de MO cibles et d'une contrainte de manipulation indiquée par l'entrée de manipulation correspondante,
dans lequel l'exécution de l'opération MO correspondant à l'entrée de manipulation comprend :
l'exécution de l'opération MO pour les un ou plusieurs MO sélectionnés sur la base d'un type de l'opération MO indiqué par l'entrée de manipulation, ou sur la base d'un type de l'opération MO et d'un ou plusieurs attributs cibles indiqués par l'entrée de manipulation.

**7.** Procédé selon la revendication 1, comprenant en outre :
la réponse de résultats desdites une ou plusieurs opérations MO.

**8.** Procédé (400) effectué par un gestionnaire d'un système de gestion de réseau pour demander une ou plusieurs opérations d'objets gérés, MO, comprenant :

la génération (410) d'au moins deux entrées de manipulation sur la base desdites une ou plusieurs opérations MO, chacune desdites au moins deux entrées de manipulation correspondant à chacune desdites une ou plusieurs opérations MO, dans lequel chacune desdites au moins deux entrées de manipulation inclut :

un identifiant de manipulation, indiquant un type de l'opération MO correspondant à l'entrée de manipulation ; et
une liste de MO cibles, indiquant une liste de MO qui sont des cibles de l'opération MO correspondant à l'entrée de manipulation ; et

la transmission (420) d'une demande desdites une ou plusieurs opérations MO, la demande incluant lesdites au moins deux entrées de manipulation.

**9.** Procédé selon la revendication 8, dans lequel chacune desdites au moins deux entrées de manipulation inclut en outre :

une liste de paires de nom-valeur d'attribut MO, chaque paire de nom-valeur d'attribut MO se composant d'un nom d'attribut MO et d'une valeur d'attribut MO correspondante, le nom d'attribut MO indiquant un attribut pour un MO dans la liste de MO cibles et la valeur d'attribut MO correspondante indiquant une valeur de l'attribut utilisé dans l'opération MO correspondant à l'entrée de manipulation ; et/ou
une contrainte de manipulation incluant :

une ou plusieurs conditions pour l'opération MO correspondant à l'entrée de manipulation ; et/ou
une ou plusieurs relations entre au moins deux MO dans la liste de MO cibles.

**10.** Appareil (220, 1500) pour effectuer une ou plusieurs opérations d'objets gérés, MO, dans un système de gestion de réseau, l'appareil comprenant :

une unité de réception (1510) configurée pour la réception d'une demande pour lesdites une ou plusieurs opérations MO, la demande incluant au moins deux entrées de manipulation, chacune desdites au moins deux entrées de manipulation correspondant à chacune desdites une ou plusieurs opérations MO, dans lequel chacune desdites au moins deux entrées de manipulation inclut :

un identifiant de manipulation, indiquant un type de l'opération MO correspondant à l'entrée de manipulation ; et
une liste de MO cibles, indiquant une liste de MO qui sont des cibles de l'opération MO correspondant à l'entrée de manipulation ;

une unité d'obtention (1520) configurée pour l'obtention desdites au moins deux entrées de manipulation à partir de la demande reçue ; et
une unité d'exécution (1530) configurée pour, pour chacune desdites au moins deux entrées de manipulation, l'exécution d'une opération MO correspondant à l'entrée de manipulation.

**11.** Appareil selon la revendication 10, dans lequel chacune desdites au moins deux entrées de manipulation inclut en outre :

une liste de paires de nom-valeur d'attribut MO, chaque paire de nom-valeur d'attribut MO se composant d'un nom d'attribut MO et d'une valeur d'attribut MO correspondante, le nom d'attribut MO indiquant un attribut pour un MO dans la liste de MO cibles et la valeur d'attribut MO correspondante indiquant une valeur de l'attribut utilisé dans l'opération MO correspondant à l'entrée de manipulation ; et/ou
une contrainte de manipulation incluant :

une ou plusieurs conditions pour l'opération MO correspondant à l'entrée de manipulation ; et/ou

une ou plusieurs relations entre au moins deux MO dans la liste de MO cibles.

12. Appareil selon la revendication 10, dans lequel l'unité d'obtention (1520) est en outre configurée pour l'obtention d'un contexte de gestion à partir de la demande reçue avant que l'unité d'exécution (1530) n'exécute l'opération MO correspondante, et l'appareil comprend en outre une unité de contrôle configurée pour le contrôle si le contexte de gestion est dans un contexte actuel pour un dispositif recevant la demande.

13. Appareil selon la revendication 12, comprenant en outre :

    une unité de transmission (1540) configurée pour la transmission, à destination d'un tiers capable de traiter l'entrée de manipulation, d'une demande de gestion contenant l'entrée de manipulation s'il est contrôlé par l'unité de contrôle que le contexte de gestion n'est pas dans le contexte actuel,
    dans lequel l'unité de réception (1510) est en outre configurée pour la réception, en provenance du tiers, d'une réponse à la demande de gestion.

14. Appareil selon la revendication 10, comprenant en outre :

    une première unité de sélection (1550) configurée pour la sélection d'un ou plusieurs MO sur la base d'une liste de MO cibles indiquée par l'entrée de manipulation avant que l'unité d'exécution (1530) n'exécute l'opération MO correspondante,
    dans lequel l'unité d'exécution (1530) est configurée pour l'exécution de l'opération MO correspondant à l'entrée de manipulation par :
    l'exécution de l'opération MO pour les un ou plusieurs MO sélectionnés sur la base d'un type de l'opération MO indiquée par l'entrée de manipulation.

15. Appareil selon la revendication 10, comprenant en outre :
    une deuxième unité de sélection (1560) configurée pour la sélection d'un ou plusieurs MO sur la base d'une liste de MO cibles et d'une contrainte de manipulation indiquée par l'entrée de manipulation correspondante, dans lequel l'unité d'exécution (1530) est configurée pour l'exécution de l'opération MO correspondant à l'entrée de manipulation par :
    l'exécution de l'opération MO pour les un ou plusieurs MO sélectionnés sur la base d'un type de l'opération MO indiqué par l'entrée de manipulation, ou sur la base d'un type de l'opération MO et d'un ou plusieurs attributs cibles indiqués par l'entrée de manipulation.

16. Appareil (210, 1600) pour demander une ou plusieurs opérations d'objets gérés, MO, dans un système de gestion de réseau, comprenant :

    une unité de génération (1610) configurée pour la génération d'au moins deux entrées de manipulation sur la base desdites une ou plusieurs opérations MO, chacune desdites au moins deux entrées de manipulation correspondant à chacune desdites une ou plusieurs opérations MO, dans lequel chacune desdites au moins deux entrées de manipulation inclut :

        un identifiant de manipulation, indiquant un type de l'opération MO correspondant à l'entrée de manipulation ; et
        une liste de MO cibles, indiquant une liste de MO qui sont des cibles de l'opération MO correspondant à l'entrée de manipulation ; et

    une unité de transmission (1620) configurée pour la transmission d'une demande desdites une ou plusieurs opérations MO, la demande incluant lesdites au moins deux entrées de manipulation.

17. Appareil selon la revendication 16, dans lequel chacune desdites au moins deux entrées de manipulation inclut en outre :

    une liste de paires de nom-valeur d'attribut MO, chaque paire de nom-valeur d'attribut MO se composant d'un nom d'attribut MO et d'une valeur d'attribut MO correspondante, le nom d'attribut MO indiquant un attribut pour un MO dans la liste de MO cibles et la valeur d'attribut MO correspondante indiquant une valeur de l'attribut utilisé dans l'opération MO correspondant à l'entrée de manipulation ; et/ou
    une contrainte de manipulation incluant :

une ou plusieurs conditions pour l'opération MO correspondant à l'entrée de manipulation ; et/ou
une ou plusieurs relations entre au moins deux MO dans la liste de MO cibles.

18. Appareil selon la revendication 16, comprenant en outre :
une unité de réception (1630) configurée pour la réception de résultats desdites une ou plusieurs opérations MO en provenance d'un dispositif recevant la demande.

19. Support de mémorisation informatique ayant des instructions exécutables par ordinateur mémorisées sur celui-ci, qui, lorsqu'elles sont exécutées par un ordinateur, rendent l'ordinateur apte à effectuer le procédé selon l'une quelconque des revendications 1 à 9.

20. Structure de données destinée à être utilisée pour demander une ou plusieurs opérations d'objets gérés, MO, dans un système de gestion de réseau, comprenant au moins deux entrées de manipulation, chacune desdites au moins deux entrées de manipulation correspondant à chacune desdites une ou plusieurs opérations MO, dans laquelle chacune desdites au moins deux entrées de manipulation inclut :

un identifiant de manipulation, indiquant un type de l'opération MO correspondant à l'entrée de manipulation ; et
une liste de MO cibles, indiquant une liste de MO qui sont des cibles de l'opération MO correspondant à l'entrée de manipulation.

21. Structure de données selon la revendication 20, dans laquelle chacune desdites au moins deux entrées de manipulation inclut en outre :

une liste de paires de nom-valeur d'attribut MO, chaque paire de nom-valeur d'attribut MO se composant d'un nom d'attribut MO et d'une valeur d'attribut MO correspondante, le nom d'attribut MO indiquant un attribut pour un MO dans la liste de MO cibles et la valeur d'attribut MO correspondante indiquant une valeur de l'attribut utilisé dans l'opération MO correspondant à l'entrée de manipulation ; et/ou
une contrainte de manipulation incluant :

une ou plusieurs conditions pour l'opération MO correspondant à l'entrée de manipulation ; et/ou
une ou plusieurs relations entre au moins deux MO dans la liste de MO cibles.

**Fig. 1**

NE

ELEMENT
MANAGER

MIB

NM SYSTEM

DOMAIN
MANAGER

... ... ...

NE

ELEMENT
MANAGER

MIB

○ MANAGER ROLE     □ AGENT ROLE

**Fig. 2**

MANAGER **210**
(CLIENT ROLE)

MANAGEMENT OPERATION
REQUEST

AGENT **220**
(SERVER ROLE)

MIB

... ... ...     ... ... ...

**Fig. 3**

```
        ╭─────────╮
        │  START  │
        ╰────┬────╯
             │
             ▼
   ┌─────────────────────┐
   │ RECEIVING REQUEST FOR│──── S310
   │   MO OPERATIONS     │
   └──────────┬──────────┘
              │
              ▼
   ┌─────────────────────┐
   │     OBTAINING       │──── S320
   │ MANIPULATION ENTRIES│
   │    FROM REQUEST     │
   └──────────┬──────────┘
              │
              ▼
   ┌─────────────────────┐
   │ FOR EACH MANIPULATION│
   │ ENTRY, PERFORMING THE│──── S330
   │   CORRESPONDING MO  │
   │     OPERATION       │
   └──────────┬──────────┘
              │
              ▼
        ╭─────────╮
        │   END   │              300
        ╰─────────╯
```

**Fig.4**

```
         ╭─────────╮
         │  START  │
         ╰────┬────╯
              │
              ▼
    ┌──────────────────┐
    │    GENERATING    │──── S410
    │ MANIPULATION     │
    │    ENTRIES       │
    └────────┬─────────┘
             │
             ▼
    ┌──────────────────┐
    │  TRANSMITTING A  │──── S420
    │ REQUEST INCLUDING│
    │ MANIPULATION     │
    │    ENTRIES       │
    └────────┬─────────┘
             │
             ▼
         ╭─────────╮
         │   END   │          400
         ╰─────────╯
```

**Fig. 5**

| |
|---|
| MANIPULATION ENTRY 1 |
| MANIPULATION ENTRY 2 |
| … … … |
| MANIPULATION ENTRY N |

**Fig. 6**

| |
|---|
| MANIPULATION IDENTIFIER |
| TARGET MO LIST |
| TARGET ATTRIBUTE LIST |
| MANIPULATION CONSTRAINT |

## Fig. 7

| MO IDENTIFIER 1 | ALIAS 1 |
|---|---|
| MO IDENTIFIER 2 | ALIAS 2 |
| … … … | … … |
| MO IDENTIFIER N | ALIAS N |

## Fig. 8

| MO ATTRIBUTE NAME 1 | VALUE 1 |
|---|---|
| MO ATTRIBUTE NAME 2 | VALUE 2 |
| … … … | … … |
| MO ATTRIBUTE NAME N | VALUE N |

## Fig. 9

Manipulation Identifier   Target MO List   Alias   Manipulation Constraint

| Select | ManagedElement=1; NodeBFunction | as | a | where | a.berAllowed>10 and a.userLabel='NodeB257' |

## Fig. 10

Manipulation Identifier   Target MO List   Alias   Target Attribute List   Manipulation Constraint

| Update | ManagedElement=1; NodeBFunction | as | a | set | a.berAllowed=a.berAllowed+1 | where | a.berAllowed>10 |

## Fig. 11

Manipulation Identifier      Target MO List            Target Attribute List

| Update | NBAPCommon as a, ATM as b, IP as c | set | b.opStatus='disabled', c.opStatus='disabled' | where |

| a.atmRef.id=b.id and a.ipRef.id=c.id and b=opStatus='enabled' and "c.opStatus='enabled' |

Manipulation Constraint

## Fig. 12

START

↓

RECEIVING MANAGEMENT OPERATION REQUEST — S1210

↓

OBTAINING MANIPULATION ENTRIES FROM REQUEST — S1220

↓ FOR EACH MANIPULATION ENTRY

CHECKING WHETHER MANAGEMENT CONTEXT IS CURRENT CONTEXT? — S1230

— No → ISSUING MANIPULATION REQUEST TO THIRD PARTY — S1240

↓ YES

EXECUTING MANIPULATION ENTRY — S1250 (OPERATION RESULT →)

↓

HAVING NEXT? — S1260 — YES →

↓ No

RESPONSE TO MANAGEMENT REQUEST FROM THIRD PARTY → RESPONDING RESULTS — S1270

↓

END

1200

**Fig. 13**

S1310

VALIDATING WHETHER STRUCTURE OF MANIPULATION ENTRY IS CORRECT? — No → RESPONDING ERROR → S1270 OF FIG. 12

YES

SELECTING MOS — S1320

PERFORMING MO OPERATION ON SELECTED MOS — S1330 — OPERATION RESULT

1300

**Fig. 14**

MANIPULATION IDENTIFIER

TARGET MOS

CONSTRAINTS

TARGET ATTRIBUTES

MO ENTRY 1

MO ENTRY 2

OPERAND

ATTRIBUTE ENTRY 1

ATTRIBUTE ENTRY 2

CONSTRAINT ENTRY 1

OPERAND

CONSTRAINT ENTRY 2

CONSTRAINT ENTRY 3

## Fig. 15

## Fig. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7100149 B1, VENKATESAN RAJASEKAR [US]
- US 2009254606 A1, POWER JOHN [IE]
- US 2009313307 A1, POWER JOHN [IE]
- US 20090254606 A1
- US 20090313307 A1

### Non-patent literature cited in the description

- CMIS/P++: Extensions to CMIS/P for Increased Expressiveness and Efficiency in the Manipulation of Management Information. IEEE, September 1998